# EUROPÄISCHE PATENTSCHRIFT

(11) **EP 3 953 596 B1**
(45) Veröffentlichungstag und Bekanntmachung des Hinweises auf die Patenterteilung: **17.01.2024**
(21) Anmeldenummer: 20716384.1
(22) Anmeldetag: 12.03.2020
(51) Int. Cl.: F16D 13/69

(54) **LAMELLENKUPPLUNG, INSBESONDRE FÜR EINEN HYBRID-ANTRIEBSSTRANG**
MULTIPLE DISC CLUTCH, IN PARTICULAR FOR A HYBRID DRIVE TRAIN
EMBRAYAGE MULTIDISQUES, EN PARTICULIER POUR UN GROUPE MOTOPROPULSEUR HYBRIDE

(30) Priorität: 10.04.2019 DE 102019109418; 01.08.2019 DE 102019120833; 10.10.2019 DE 102019127238
(43) Veröffentlichungstag der Anmeldung: 16.02.2022
(73) Patentinhaber: Schaeffler Technologies AG & Co. KG, 91074 Herzogenaurach (DE)
(72) Erfinder: DANNHÄUSER, Matthias, 69254 Malsch (DE); ISHMURATOV, Radmir, 77815 Bühl (DE); VOGEL, Florian, 77815 Bühl (DE); DAIKELER, René, 77880 Sasbach (DE)
(86) Internationale Anmeldenummer: PCT/DE2020/100186
(87) Internationale Veröffentlichungsnummer: WO 2020/207527

(56) Entgegenhaltungen:
- EP-A1- 3 164 615
- WO-A1-2016/148999
- DE-A1-102018 117 326
- JP-U- H0 425 033
- US-A- 2 524 311

## Beschreibung

Die Erfindung betrifft eine Lamellenkupplung, mit deren Hilfe eine insbesondere als Verbrennungsmotor ausgestaltete Brennkraftmaschine mit einem Antriebsstrang eines, insbesondere als Hybrid-Kraftfahrzeug ausgestaltetes, Kraftfahrzeug wahlweise gekoppelt werden kann.

Aus DE 10 2018 103 524 A1 ist eine Lamellenkupplung für einen Hybrid-Antriebsstrang eines Kraftfahrzeugs bekannt, bei dem die für eine Reibpaarung verwendeten in einem jeweils zugeordneten Lamellenträger axial verschiebbaren Lamellen über abgesetzte Zahnflansche mit dem zugeordneten Lamellenträger drehmomentübertragend gekoppelt sind, wobei die über einen einzelnen Flanschsteg abgesetzten Zahnflansche eine axiale Relativbewegung zu den Reibflächen der Lamelle ausführen können.

Es besteht ein ständiges Bedürfnis ein Verklemmen und eine ungünstige Positionierung von Lamellen einer Lamellenkupplung zu vermeiden.

Ferner ist aus der DE 10 2018 117 326 A1 eine Lamellenkupplung bekannt, die auf den Oberbegriff des Anspruchs 1 lesbar ist.

Es ist die Aufgabe der Erfindung Maßnahmen aufzuzeigen, die das Risiko eines Verklemmens und/oder einer ungünstigen Positionierung von Lamellen in einer Lamellenkupplung reduzieren.

Die Lösung der Aufgabe erfolgt erfindungsgemäß durch eine Lamellenkupplung mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist eine Lamellenkupplung für einen Antriebsstrang eines Kraftfahrzeugs vorgesehen mit einem Außenlamellenträger zum Übertragen eines Drehmoments, mehreren in dem Außenlamellenträger axial verschiebbar eingehangenen Außenlamellen zur jeweiligen Bereitstellung einer ersten Reibfläche, wobei zumindest eine der Außenlamellen, vorzugsweise jede Außenlamelle, ein, insbesondere zahnförmiges, Außenkoppelelement zur drehmomentübertragenden Koppelung mit dem Außenlamellenträger aufweist, einem Innenlamellenträger zum Übertragen eines Drehmoments, mehreren in dem Innenlamellenträgers axial verschiebbar eingehangenen Innenlamellen zur jeweiligen Bereitstellung einer zweiten Reibfläche für eine Reibpaarung mit der ersten Reibfläche einer axial benachbarten Außenlamelle, wobei zumindest eine der Innenlamellen, vorzugsweise jede Innenlamelle, ein, insbesondere zahnförmiges, Innenkoppelelement zur drehmomentübertragenden Koppelung mit dem Innenlamellenträger aufweist, wobei sämtliche Außenkoppelelemente nach radial außen von einem in Umfangsrichtung durchgängig verlaufenden Außenring und/oder sämtliche Innenkoppelelemente nach radial innen von einem in Umfangsrichtung durchgängig verlaufenden Innenring abstehen, wobei die erste Reibfläche über mindestens ein Außen-Blattfederelement zur Bereitstellung einer federnden axialen Relativbewegung des Außenkoppelelements zu der ersten Reibfläche mit dem Außenring und/oder die zweite Reibfläche über mindestens ein Innen-Blattfederelement zur Bereitstellung einer federnden axialen Relativbewegung des Innenkoppelelements zu der zweiten Reibfläche mit dem Innenring verbunden ist.

Die jeweilige Lamelle kann über eine durch die jeweiligen Koppelelemente ausgebildete zweidimensionale Konturierung axial verschiebbar in eine korrespondierende Konturierung des zugehörigen Lamellenträgers eingesteckt, das heißt eingehangen, sein. Die Außenlamellen und die Innenlamellen können in axialer Richtung alternierend hintereinander angeordnet sein. Die Lamellen können in axialer Richtung zwischen einer axial feststehenden Gegenplatte und einer relativ zu der Gegenplatte von einem Betätigungssystem axial verlagerbaren Anpressplatte angeordnet sein und bei einem Schließen der Lamellenkupplung zwischen der Gegenplatte und der Anpressplatte reibschlüssig verpresst werden, wobei hierbei die erste Reibfläche und die zweite Reibfläche voneinander nachfolgenden Lamellen aneinander angreifen und eine Reibpaarung ausbilden. Die Anpressplatte und/oder die Gegenplatte kann hierbei ebenfalls als Außenlamelle und/oder Innenlamelle ausgestaltet sein. Im geschlossenen Zustand der Lamellenkupplung kann zwischen dem Außenlamellenträger und dem Innenlamellenträger über die reibschlüssig aufeinandergepressten Lamellen und die ausgebildeten Reibpaarungen ein Drehmoment übertragen werden. Insbesondere sind die Außenlamellen als Stahllamellen und die Innenlamellen als jeweils beidseitig mit Reibbelägen versehene Belaglamelle ausgestaltet oder die Innenlamellen sind als Stahllamellen und die Außenlamellen als jeweils beidseitig mit Reibbelägen versehene Belaglamelle ausgestaltet. Die Lamellenkupplung kann als trockene Lamellenkupplung, bei der kein Kühl- ober Schmiermittel verwendet wird, oder als nasse Lamellenkupplung, bei der die Lamellen mit einem Kühl- und/oder Schmiermittel in Kontakt geraten, ausgestaltet sein.

Das die Koppelelemente ausbildende Bauteil der jeweiligen Lamelle kann aus einem Blech, insbesondere durch Stanzen, hergestellt sein. Dadurch können die Lamellen kostengünstig mit Hilfe dünner Metallbleche hergestellt sein. Bei der Drehmomentübertragung können die jeweiligen Koppelelemente mit ihrer in tangentialer Richtung weisenden Schmalseite an einer, insbesondere als Verzahnung ausgestalteten, Konturierung des zugehörigen Lamellenträgers formschlüssig angreifen. Insbesondere ist die jeweilige Lamelle über die in radialer Richtung nach radial innen beziehungsweise nach radial außen weisende Schmalseite an dem zugehörigen Lamellenträger in radialer Richtung zentriert. Dies kann zu einer komplexen Lagerung der Lamellen in dem zugehörigen Lamellenträger führen, die insbesondere bei ungünstigen Toleranzverhältnissen zu Fehlstellungen der Lamelle und/oder einem Verklemmen in dem zugehörigen Lamellenträger führen kann. Durch die axial federnde Anbindung der Reibflächen mit Hilfe der Blattfederelemente kann jedoch in einer derartigen Situation ein axialer Ausgleich erfolgen, so dass in sämtlichen Reibpaarungen der Lamellenkupplung im Wesentlichen gleichartige Reibungsverhältnisse vorliegen können und ein unnötiger Verschleiß durch Kraftspitzen in einzelnen Reibpaarungen vermieden ist. Das jeweilige Blattfederelement kann als ein, insbesondere im Wesentlichen tangential und/oder in Umfangsrichtung verlaufender, Blechstreifen ausgestaltet sein, der in Richtung seiner Flächennormalen in axialer Richtung der Lamellenkupplung elastisch verbogen werden kann. Das Blattfederelement kann an dem einem Ende mit dem zugehörigen Ring und an dem anderen Ende mittelbar oder unmittelbar mit der zugehörigen Reibfläche verbunden sein. Beispielswiese kann das von dem Ring wegweisende Ende des jeweiligen Blattfederelements mit einem Befestigungsbereich verbunden sein, an dem ein die erste Reibfläche beziehungsweise die zweite Reibfläche ausbildendes Blech oder Reibbelag befestigt ist.

Da die Koppelelemente von einem gemeinsamen Ring abstehen, kann durch den Ring eine zusätzliche Versteifung erreicht werden. Ein Verdrehen beziehungsweise Biegen eines Koppelelements um eine radial verlaufende Biegeachse kann dadurch vermieden oder zumindest reduziert werden. Zudem ist es möglich ein Kippen beziehungsweise Biegen eines Koppelelements um eine tangential verlaufende Kippachse zu vermeiden oder zumindest zu reduzieren. Die Relativlage mehrerer Koppelelemente in Umfangsrichtung der Lamelle kann in einem höheren Ausmaß auch unter Last im Wesentlichen konstant bleiben. Ein Verklemmen und ein erhöhter Verschleiß des Koppelelements kann dadurch vermieden werden, so dass insbesondere besonders hohe Drehmomente über die jeweilige Lamelle übertragen werden können, ohne eine Beeinträchtigung der Drehmomentübertragung oder unnötigen Verschleiß befürchten zu müssen. Durch die an den die Koppelelemente ausbildenden durchgängigen Ring axial angefederten Reibflächen der Lamellen ist das Risiko eines Verklemmens und/oder einer ungünstigen Positionierung von Lamellen in einer Lamellenkupplung reduziert.

Die Lamellenkupplung ist dadurch insbesondere für einen Einsatz als sogenannte "KO-Kupplung" in einem Hybridmodul eines Antriebsstrangs für ein Hybrid-Kraftfahrzeug geeignet, um eine Antriebswelle einer Brennkraftmaschine mit einer mit einem Rotor eine elektrischen Maschine gekoppelten Zwischenwelle zu koppeln, über die das in der Brennkraftmaschine erzeugte motorische Drehmoment und/oder das in der elektrischen Maschine erzeugte elektrische Drehmoment an ein Kraftfahrzeuggetriebe übertragen werden kann. Mit Hilfe des jeweiligen versteifenden Rings kann die axiale Relativbewegung der Lamellen zwischen der geöffneten und der geschlossenen Stellung der Lamellenkupplung reibungsreduziert beziehungsweise weitestgehend reibungsfrei erfolgen. Die Lamellenkupplung kann dadurch insbesondere ungeschmiert als trockene Lamellenkupplung eingesetzt werden. Während der Übertragung des Drehmoments, die bei fast ganz oder fast vollständig geschlossener Lamellenkupplung erfolgt, wird eine Verschiebereibung größer als die axiale Federkraft des Blattfederelements und ein reibungsbehaftetes Abgleiten der Koppelelemente an dem Lamellenträger unterbleibt. Eine axiale Relativbewegung der Reibfläche ist aufgrund der Federdurchbiegung des Blattfederelements aber noch möglich, so dass bei einer reduzierten Reibung und dadurch reduzierten Verschleiß eine gleichartige Drehmomentübertragung in den verschiedenen Reibpaarungen erreicht werden kann. Über die Erhöhung der Anzahl der Koppelelemente kann das zu übertragende Drehmoment auf entsprechend mehr Koppelelemente verteilt werden, wodurch die Flächenpressung an den tangentialen Schmalseiten der Koppelelemente reduziert werden kann. Hierbei kann eine möglichst kleine Federsteifigkeit der Blattfederelemente in axialer Richtung der Lamellenkupplung angestrebt werden, wobei gleichzeitig eine ausreichende Übertragungssicherheit des anliegenden Drehmoments sichergestellt sein kann.

Insbesondere ist vorgesehen, dass die Außenkoppelelemente und die erste Reibfläche auf unterschiedliche zur Ausbildung der Außenlamelle miteinander verbundene Bauteile und/oder die Innenkoppelelemente und die zweite Reibfläche auf unterschiedliche zur Ausbildung der Innenlamelle miteinander verbundene Bauteile aufgeteilt sind. Die jeweilige Lamelle kann aus einem die Koppelelemente und die Blattfederelemente aufweisenden Trägerblech und einer die jeweilige mindestens eine Reibfläche aufweisende Scheibe, insbesondere Stahlscheibe zur Ausbildung einer Stahllamelle oder Reibbelag zur Ausbildung einer Belaglamelle, zusammengesetzt sein. Das Trägerblech kann einen Befestigungsbereich aufweisen, der über das mindestens eine Blattfederelement mit dem die Koppelelemente ausbildenden Ring axial federnd verbunden sein kann, wobei die separate Scheibe ausschließlich über den mindestens einen Befestigungsbereich, vorzugsweise mehrere Befestigungsbereiche, mit dem Trägerblech, beispielsweise durch Vernieten, verbunden sein kann. Das Trägerblech ist insbesondere einstückig ausgeführt, so dass die Koppelelemente, der Ring, die Blattfederelemente und der Befestigungsbereich als ein einstückiges Bauteil durch Ausstanzen aus einem Metallblech kostengünstig hergestellt werden können. Alternativ ist es möglich das Trägerblech mehrteilig, beispielsweise zweiteilig, ausgestalten, indem beispielsweise der Ring mit den Koppelelemente als ein erstes separates Teil des Trägerblechs und der Befestigungsbereiche mit den Blattfederelementen als ein zweites separates Teil ausgestaltet werden, die insbesondere durch Vernieten miteinander verbunden sind. Durch die zweigeteilte Ausführung kann im Verzahnungsbereich ein dickeres Material verwendet werden, so dass bei der Momentenübertragung die Flächenpressung reduziert ist.

Vorzugsweise ist vorgesehen, dass das Außen-Blattfederelement und/oder das Innen-Blattfederelement im Wesentlichen in Umfangsrichtung und/oder in tangentialer Richtung verläuft. Eine Längserstreckung des jeweiligen Blattfederelements in radialer Richtung ist dadurch vermieden, so dass ein Kippen des Koppelelements um eine tangential verlaufende Kippachse vermieden werden kann. Zudem kann in Umfangsrichtung leicht genügend Bauraum für das Blattfederelement geschaffen werden, um eine möglichst lange Längserstreckung des Blattfederelements zu erreichen, die zu einer entsprechend geringen Federsteifigkeit führt. Das Blattfederelement kann hierbei eine im Wesentlichen lineare und/oder eine im Wesentlichen dem Radius folgende gebogene Längserstreckung aufweisen.

Besonders bevorzugt ist vorgesehen, dass das Außenkoppelelement über mindestens zwei, insbesondere genau zwei, Außen-Blattfederelemente mit der ersten Reibfläche und/oder das Innenkoppelelement über mindestens zwei, insbesondere genau zwei, Innen-Blattfederelemente mit der zweiten Reibfläche verbunden ist. Durch die mehr als eine Blattfeder kann ein Verkippen, ein Verschwenken oder eine radiale Verschiebung der Reibfläche relativ zu dem zugehörigen Ring der Lamelle vermieden oder zumindest reduziert werden. Insbesondere ist ein Befestigungsbereich, an die die jeweilige Reibfläche angebunden ist, über zwei voneinander weg verlaufende Blattfederelemente mit dem die Koppelelemente ausbildenden Ring verbunden, so dass bereits ein Verkippen, ein Verschwenken oder eine radiale Verschiebung des Befestigungsbereichs weitgehend blockiert werden kann.

Insbesondere ist vorgesehen, dass die Außenlamelle einen im Wesentlichen in Umfangsrichtung verlaufenden und vollständig geschlossenen Schlitz zur einstückigen Ausbildung des Außen-Blattfederelements mit den Außenkoppelelement und/oder die Innenlamelle einen im Wesentlichen in Umfangsrichtung verlaufenden und vollständig geschlossenen Schlitz zur einstückigen Ausbildung des Innen-Blattfederelements mit den Innenkoppelelement aufweist. Durch den Schlitz kann radial beabstandet zu dem Ring das mindestens eine Blattfederelement und gegebenenfalls ein Befestigungsbereich zur Befestigung der Reibfläche abgetrennt werden, wobei gleichzeitig eine einstückige Anbindung erhalten bleibt. Da der Schlitz nicht an einer Seite geöffnet, sondern vollständig geschlossen ausgeführt ist, wird für das Blattfederelement ein frei abstehendes Ende vermieden, wodurch die Bewegungsrichtungen des Blattfederelements bei einer Belastung stark eingeschränkt sind. Dadurch kann sichergestellt werden, dass das Blattfederelement im Wesentlichen nur in axialer Richtung elastisch verbogen werden kann. Ein Verklemmen des Koppelelements in einer Verzahnung des zugehörigen Lamellenträgers kann dadurch vermieden werden.

Vorzugsweise ist vorgesehene, dass die Erstreckung des Außen-Blattfederelements in Umfangsrichtung mindestens der Erstreckung des Außenkoppelelements, insbesondere mindestens der doppelten Erstreckung des Außenkoppelelements, und/oder die Erstreckung des Innen-Blattfederelements in Umfangsrichtung mindestens der Erstreckung des Innenkoppelelements, insbesondere mindestens der doppelten Erstreckung des Innenkoppelelements, entspricht. Durch die große Erstreckung des Blattfederelements im Vergleich zu dem Koppelelement kann eine geringe Federsteifigkeit des Blattfederelements in axialer Richtung erreicht werden. Die Erstreckung des Blattfederelements kann insbesondere geringer als die sechsfache, die fünffache oder die vierfache Erstreckung des zugehörigen Koppelelements sein, so dass entsprechend viele Blattfederelemente auf demselben Radius in Umfangsrichtung verteilt werden können, um ein Verkippen des Reibbelags relativ zu dem Ring zu vermeiden.

Besonders bevorzugt ist vorgesehen, dass der Außenlamellenträger eine regelmäßige oder unregelmäßige Innenverzahnung zur drehmomentübertragenden und axial verschiebbaren Aufnahme der Außenkoppelelemente und/oder der Innenlamellenträger eine regelmäßige oder unregelmäßige Außenverzahnung zur drehmomentübertragenden und axial verschiebbaren Aufnahme der Innenkoppelelemente aufweist. Das jeweilige Koppelelement kann in die Verzahnung des zugeordneten Lamellenträgers, insbesondere mit Spielpassung, eingreifen, um einen drehmomentübertragenden Formschluss herzustellen. Gleichzeitig kann das Koppelelement innerhalb der Verzahnung in axialer Richtung abgleiten und/oder verschoben werden, um einen Axialversatz zwischen einer geöffneten Stellung und einer geschlossenen Stellung der Lamellenkupplung leicht mitgehen zu können. Die Zähne und Vertiefungen der Verzahnung des Lamellenträgers können regelmäßig, das heißt mit identischem Abstand und identischer Erstreckung in Umfangsrichtung, angeordnet sein, so dass die jeweilige Lamelle in vielen verschiedenen Relativdrehlagen in den Lamellenträger eingehangen werden kann. Wenn eine bestimmte Relativwinkellage zwischen der jeweiligen Lamelle und dem zugehörigen Lamellenträger gewünscht ist, können die Zähne und Vertiefungen der Verzahnung des Lamellenträgers auch unregelmäßig, das heißt mit zumindest teilweise unterschiedlichem Abstand und/oder Erstreckung in Umfangsrichtung, angeordnet sein.

Insbesondere ist die erste Reibfläche oder die zweite Reibfläche durch einen separaten Reibbelag ausgebildet. Dadurch können entweder die mehreren Außenlamellen oder die mehreren Innenlamellen als Belaglamelle ausgestaltet sein, während die entsprechend anderen Lamellen als Stahllamelle, das heißt frei von Reibbelägen, ausgestaltet sein können. Vorzugsweise ist bei der Belaglamelle eine Trägerscheibe vorgesehen, auf deren beiden Axialseiten jeweils ein Reibbelag, beispielsweise durch Kleben, befestigt ist.

Vorzugsweise ist vorgesehen, dass eine axiale Relativbewegung der ersten Reibfläche relativ zum Außenkoppelelement bezogen auf eine Ausgangslage bei minimaler axialer Federkraft des Außen-Blattfederelements und/oder eine axiale Relativbewegung der zweiten Reibfläche relativ zum Innenkoppelelement bezogen auf eine Ausgangslage bei minimaler axialer Federkraft des Innen-Blattfederelement in beide Axialrichtungen oder nur in eine Axialrichtung zugelassen ist. Bezogen auf die unbelastete Ausgangslage kann eine axiale Relativbewegung der Reibfläche in beide Axialrichtungen oder nur in eine Axialrichtung zugelassen sein. Wenn eine Relativbewegung nur in einer Axialrichtung zugelassen werden soll, kann insbesondere ein mit der Reibfläche verbundener Axialanschlag, der beispielsweise durch eine Rückseite eines Reibbelags oder einen nach radial außen abstehenden Ansatz ausgebildet sein kann, axial an dem die Koppelelemente tragenden Ring anschlagen. Dadurch kann beispielsweise ein Anhaften eines Reibbelags an der zuvor angepressten benachbarten Lamelle bei einem Öffnen der Lamellenkupplung vermieden werden, so dass ein unnötiges und verschleißbehaftetes Mitziehen der anhafteten Lamelle vermieden werden kann.

Die Erfindung betrifft ferner einen Antriebsstrang für ein Hybrid-Kraftfahrzeug mit einem Brennkraftmaschine zum Antrieb des Hybrid-Kraftfahrzeug, einer elektrischen Maschine zum Antrieb des Hybrid-Kraftfahrzeug und einer Lamellenkupplung, die wie vorstehend beschrieben aus- und weitergebildet sein kann, zur wahlweisen Koppelung einer Antriebswelle der Brennkraftmaschine mit einer mit einem Rotor der elektrischen Maschine gekoppelten Zwischenwelle, wobei insbesondere die Zwischenwelle den Rotor der elektrischen Maschine ausbildet. Beispielsweise ist der Außenlamellenträger durch einen Rotor-Topf ausgebildet, der insbesondere an seiner nach radial außen weisenden Mantelfläche Permanentmagneten aufweist, um den mit Elektromagneten eines Stators zusammenwirkenden Rotor der elektrischen Maschine auszubilden. Der Innenlamellenträger kann durch einen unmittelbar oder mittelbar mit der Antriebswelle der vorzugsweise als Verbrennungsmotor ausgestalteten Brennkraftmaschine verbundenen Mitnehmerkranz ausgebildet sein. Vorzugsweise kann die elektrische Maschine wahlweise im Motorbetrieb und im Generatorbetrieb betrieben werden. Durch die an den die Koppelelemente ausbildenden durchgängigen Ring axial angefederten Reibflächen der Lamellen der Lamellenkupplung ist das Risiko eines Verklemmens und/oder einer ungünstigen Positionierung von Lamellen in der Lamellenkupplung reduziert, so dass der Antriebsstrang verschleißärmer und langlebiger ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische perspektivische Schnittansicht einer Lamellenkupplung,
- Fig. 2:: eine schematische perspektivische Explosionsansicht der Lamellenkupplung aus Fig. 1,
- Fig. 3:: eine schematische Draufsicht auf eine Innenlamelle der Lamellenkupplung aus Fig. 1,
- Fig. 4:: eine schematische Detailansicht auf ein Trägerblech der Innenlamelle aus Fig. 3,
- Fig. 5:: eine schematische Draufsicht auf eine Außenlamelle der Lamellenkupplung aus Fig. 1,
- Fig. 6:: eine schematische Detailansicht auf ein Trägerblech der Außenlamelle aus Fig. 5,
- Fig. 7:: eine schematische Draufsicht auf eine alternative Ausführungsform für eine Innenlamelle der Lamellenkupplung aus Fig. 1 und
- Fig. 8:: eine schematische Draufsicht auf eine alternative Ausführungsform für eine Außenlamelle der Lamellenkupplung aus Fig. 1.

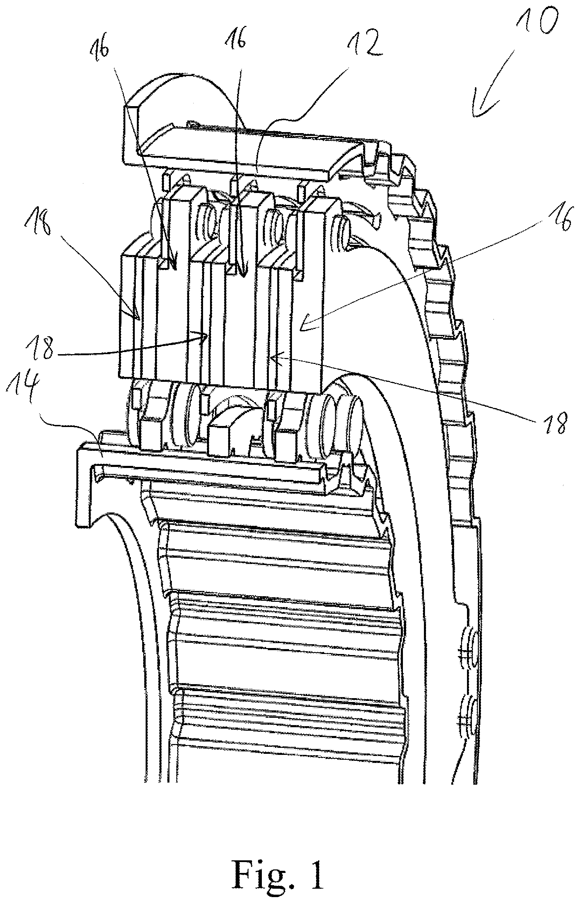

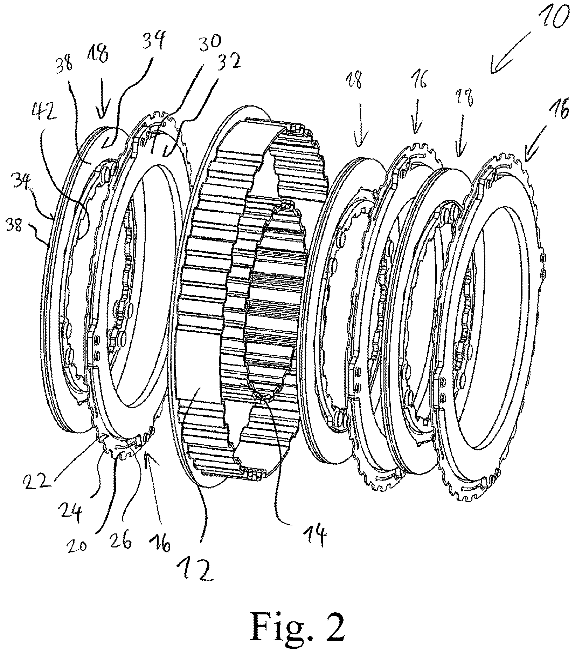

Die in Fig. 1 und Fig. 2 dargestellte Lamellenkupplung 10 ist insbesondere als trockene Lamellenkupplung ausgestaltet, die in einem Antriebsstrang eines Hybrid-Kraftfahrzeugs wahlweise ein in einer Brennkraftmaschine und/oder einer elektrischen Maschine erzeugtes Drehmoment an ein Kraftfahrzeuggetriebe übertragen soll. Die Lamellenkupplung 10 weist einen als Rotor-Topf ausgestalteten Außenlamellenträger 12 und einen als Mitnehmerring ausgebildeten Innenlamellenträger 14 auf. In dem Außenlamellenträger 12 sind als Stahllamellen ausgestaltete Außenlamellen 16 drehmomentübertragend aber axial verschiebbar eingehangen. In dem Innenlamellenträger 14 sind als Belaglamellen ausgestaltete Innenlamellen 18 drehmomentübertragend aber axial verschiebbar eingehangen. Durch die axiale Verlagerung der Außenlamellen 16 und der Innenlamellen 18 aufeinander zu, insbesondere mit Hilfe eines eine axial verschiebbare Anpressplatte gegen eine axial feststehende Gegenplatte verlagernden Betätigungssystems, können die Lamellen 16, 18 Reibpaarungen bilden, über die ein Drehmoment reibschlüssig zwischen dem Außenlamellenträger 12 und dem Innenlamellenträger 14 ausgetauscht werden kann.

Die Anordnung von Stahl- und Belaglamellen kann prinzipiell in beide Richtungen erfolgen (innen und außen). Ebenso kann prinzipiell an beiden Lamellentypen ein separater Verzahnungsring 20 angebracht werden. Hier wird exemplarisch nur auf den Fall einer innen liegenden Reiblamelle mit Verzahnungsring 20 in Kombination mit einer außenliegenden Stahllamelle ohne zusätzlichen Verzahnungsring eingegangen.

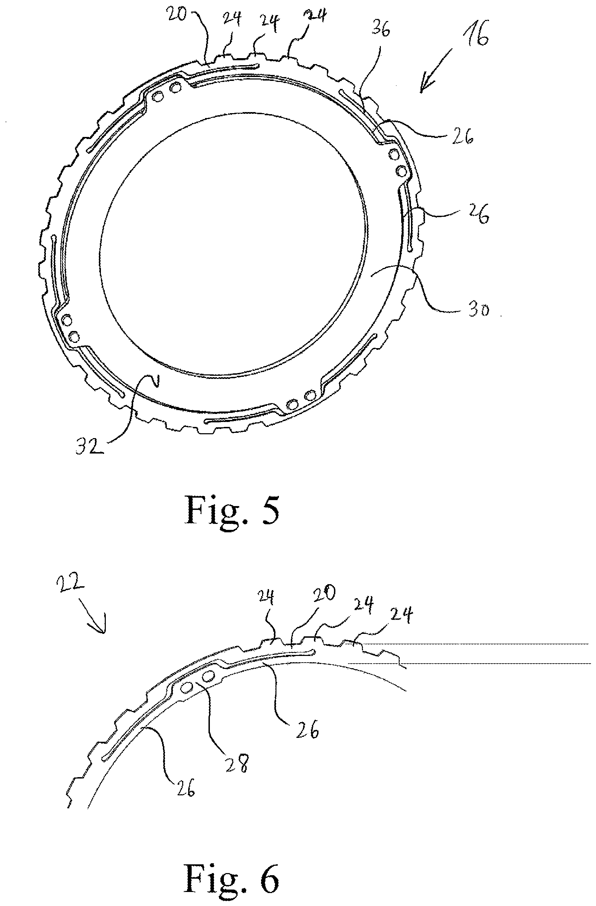

Das von einem Rotor der elektrischen Maschine über den Außenlamellenträger 12 eingeleitete Moment wird über ein separates Trägerblech 22 der Außenlamelle 16 eingeleitet. Dieses Trägerblech 22 besitzt am Außendurchmesser mehrere trapezförmige beziehungsweise zahnförmige Außenkoppelelemente 24, die eine Verzahnung ausbilden und in eine korrespondierende Verzahnung des Außenlamellenträgers 12 formschlüssig eingreifen. Der Verzahnungsring 20 der Außenlamelle 16 ist dadurch durch einen Außenring mit nach radial außen abstehenden Außenkoppelelementen 24 ausgestaltet, wie in Fig. 5 und Fig. 6 dargestellt. Weiterhin weist das Trägerblech 22 im Wesentlichen tangential und/oder in Umfangsrichtung verlaufende Außen-Blattfederelemente 26 auf, von denen jeweils zwei Außen-Blattfederelemente 26 einen Befestigungsbereich 28 anbinden. Mit dem Befestigungsbereich 28 ist eine Stahlscheibe 30 vernietet. Die an ihren Axialseiten jeweils eine erste Reibfläche 32 ausbildet, um mit einer jeweils axial gegenüberliegenden zweiten Reibfläche 34 der Innenlamelle 18 eine Reibpaarung auszubilden. Der Verzahnungsring 20, die Außenkoppelelemente 24, die Außen-Blattfederelemente 26 und die Befestigungsbereiche 28 sind einstückig ausgeführt und bilden das Trägerblech 22 aus, so dass die Außenlamelle 16 im dargestellten Ausführungsbeispiel im Wesentlichen aus dem Trägerblech 22 und der mit dem Trägerblech 22 über eine geeignete Verbindungstechnik befestigten Stahlscheibe 30 besteht. Die Außen-Blattfederelemente 26 und die Befestigungsbereiche 28 können über einen umlaufend geschlossenen Schlitz 36 von dem übrigen Trägerblech 22, das heißt dem Verzahnungsring 20 mit den Außenkoppelelemente 24 getrennt sein, so dass nur eine dünne einstückige Verbindung der von dem jeweiligen Befestigungsbereich 28 weg weisenden Ende der Außen-Blattfederelemente 26 mit dem Verzahnungsring 20 verbleibt.

Wenn die Lamellenkupplung 10 geschlossen wird, kann die Stahlscheibe 30 mit ihren ersten Reibflächen 32 aufgrund der axial nachfedernden Außen-Blattfederelementen 26 eine axiale Relativbewegung zu dem Verzahnungsring 20 ausführen, so dass ein verschleißbehaftetes Abgleiten der Außenkoppelelemente 24 in der Verzahnung des Außenlamellenträgers 12 und/oder ein Verklemmen und/oder eine Überpositionierung vermieden oder zumindest reduziert werden kann. Da die Steifigkeit der Außen-Blattfederelemente 26 insbesondere so gering wie möglich gehalten werden soll, tritt bereits bei einem kleinen anliegenden Moment keine Relativbewegung/Verschiebereibung in der Verzahnung mehr auf.

Die Innenlamelle 18 kann im Wesentlichen analog zu der Außenlamelle 16 ausgestaltet sein. Die Innenlamelle 18 überträgt das Drehmoment von der Außenlamelle 16 auf den Innenlamellenträger 14. Die als Belaglamelle ausgestaltete Innenlamelle 18 weist Reibbeläge 38 auf, die jeweils in unterschiedliche Axialrichtungen weisenden zweite Reibflächen 34 ausbilden. Die Reibbeläge 38 sind ebenfalls mit einem Trägerblech 22 verbunden, indem die Reibbeläge 38 mit über Innen-Blattfederelemente 40 angebundene Befestigungsbereiche 28 verbunden, beispielswiese vernietet und/oder verklebt, sind. Je nach voraussichtlicher Flächenpressung von in dem Innenlamellenträger 14 axial verschiebbar eingehangenen Innenkoppelelemente 42 der Innenlamelle 18 können die eine Verzahnung ausbildenden Innenkoppelelemente 42 entweder direkt im Trägerblech 22 einstückig ausgebildet sein oder insbesondere bei großen Kupplungsmomenten auch in einem separaten Bauteil, das den in Umfangsrichtung geschlossenen Verzahnungsring 20 und die Innenkoppelelemente 42 aufweist, vorgesehen sein, das mit dem übrigen Trägerblech 22 separat befestigt, insbesondere vernietet, ist. Der Verzahnungsring 20 der Innenlamelle 18 ist dadurch durch einen Innenring mit nach radial innen abstehenden Innenkoppelelementen 42 ausgestaltet.

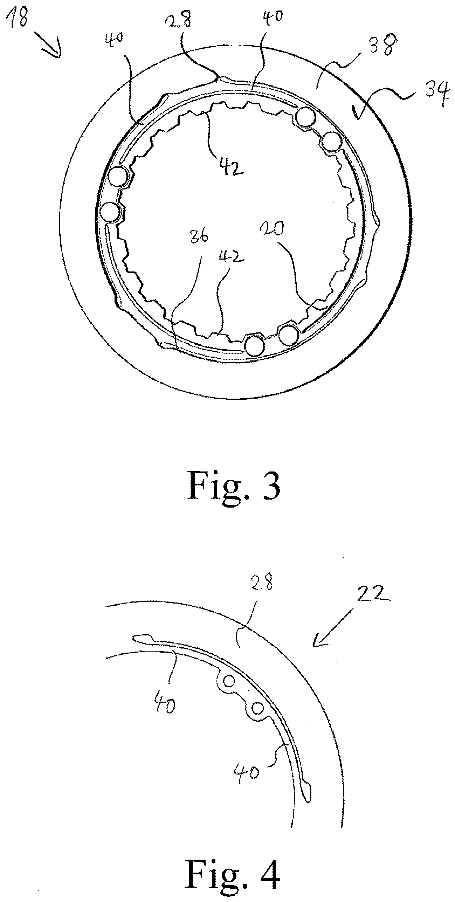

Das Trägerblech 22 der Innenlamelle 18 weist ebenfalls einen vollständig geschlossenen Schlitz 36 auf, um die Innen-Blattfederelemente 40 und die an diesen befestigten Befestigungsbereich 24 auszubilden, wie in Fig. 3 und Fig. 4 dargestellt ist. Durch die Innen-Blattfederelemente 40 können die Reibbeläge 38 zusammen mit den zweiten Reibflächen 34 in axialer Richtung relativ zu dem Verzahnungsring 20 mit den Innenkoppelelementen 42 und dem Innenlamellenträger 14 verlagert werden. Das Funktionsprinzip ist im Wesentlichen identisch zu der Außenlamelle 16.

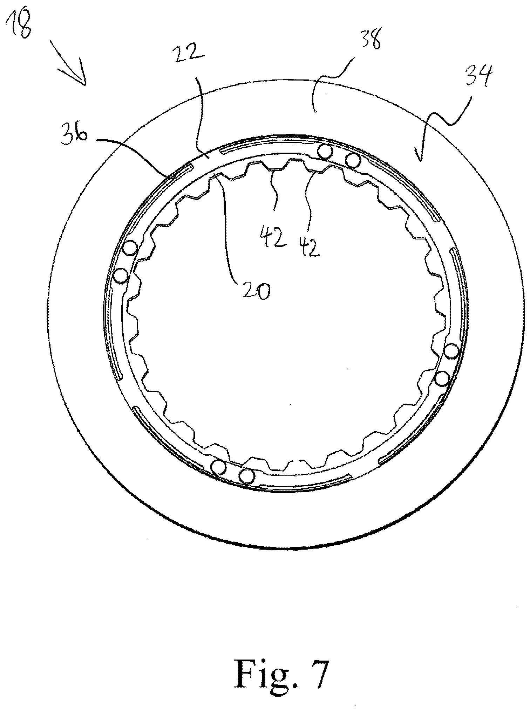

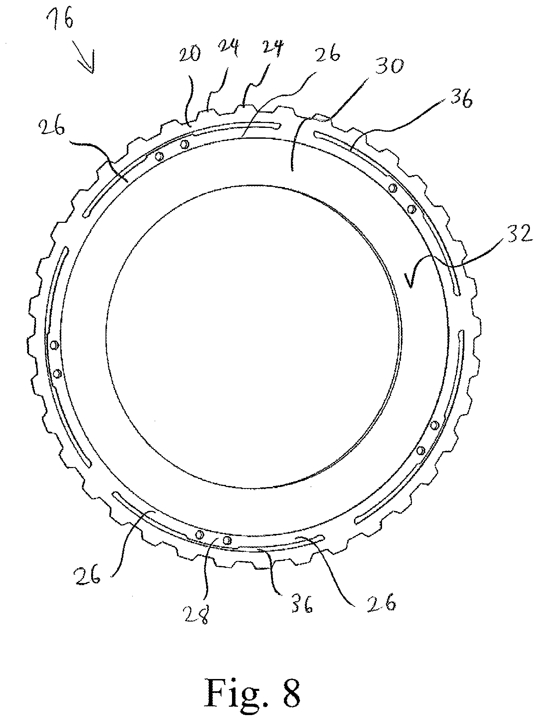

Um die Lamellenkupplung 10 möglichst bauraumeffizient zu gestalten, besteht die Möglichkeit die mit Hilfe der Blattfederelemente 26,40 bereitgestellte axiale Federung in den Trägerblechen 22 so auszuführen, dass eine Federung nur in eine axiale Richtung möglich ist, wie in Fig. 7 und Fig. 8 dargestellt. Dies hat den Vorteil, dass der Verzahnungsteilkreis der Koppelelemente 24, 42 näher an der Reibfläche 32, 34 liegen kann. Eine in dieser Variante auftretende Verschiebereibung beim Öffnen oder Schließen der Lamellenkupplung 10 kann gegenüber vorbekannten Lamellenkupplungen aus dem Stand der Technik jedoch reduziert sein.

Eine weitere Möglichkeit, (sowohl bei ein- oder auch beidseitig federnden Trägerblechen 22) Bauraum zu gewinnen, besteht darin, die durch die Koppelelemente 24, 42 ausgebildete Verzahnung nicht ganz umlaufend zu gestalten, sondern an den Vernietungspositionen zu unterbrechen und ungleichmäßig auszuführen, wie in Fig. 7 und Fig. 8 dargestellt. Dadurch liegen die Niete und somit auch die Reibfläche 32, 34 näher am Verzahnungsteilkreis der Koppelelemente 24, 42. Der Verlust der Kontaktfläche kann dabei in der Auslegung der Flächenpressung berücksichtigt werden. Weiterhin können die Niete mit ovalem Schaftquerschnitt ausgeführt werden. In radialer Richtung wird kein Moment übertragen, so dass der Querschnitt hier kleiner ausfallen kann als in Umfangsrichtung. Dies führt zu einem Bauraumvorteil in radialer Richtung.

An der als Belaglamelle ausgestalteten Innenlamelle 18 besteht die Möglichkeit, die Innen-Blattfederelemente 40 des Trägerbleches 22 in die zweite Reibfläche 34 hineinlaufen zu lassen. Der Übergangsradius zwischen den Innen-Blattfederelementen 40 und der zweiten Reibfläche 34 stellt nämlich die spannungskritischste Stelle dar und kann dadurch möglichst groß ausgeführt werden. Damit dies nicht zu viel Bauraum erfordert, kann diese Aussparung in die zweite Reibfläche 34 hineinlaufen und beispielsweise vom Reibbelag 38 überdeckt werden oder dieser wird an den entsprechenden Stellen etwas ausgespart.

In einem Antriebsstrang für ein Hybrid-Kraftfahrzeug kann eine als Verbrennungsmotor ausgestaltete Brennkraftmaschine über eine als Kurbelwelle ausgestaltete Antriebswelle der Brennkraftmaschine mit der Lamellenkupplung 10 verbunden sein, die insbesondere als KO-Kupplung und/oder Trennkupplung zum Trennen und Verbinden der Brennkraftmaschine von beziehungsweise mit dem Antriebsstrang ausgebildet ist. Über eine mit der Lamellenkupplung 10 verbindbare Ausgangswelle kann das Drehmoment auf Räder des Kraftfahrzeugs übertragen werden. Die Lamellenkupplung 10 ist insbesondere in einen Rotor einer elektrischen Maschine bauraumsparend integriert, die im Motorbetrieb und/oder Generatorbetrieb betrieben werden kann.

### Bezugszeichenliste

- 10: Lamellenkupplung
- 12: Außenlamellenträger
- 14: Innenlamellenträger
- 16: Außenlamelle
- 18: Innenlamelle
- 20: Verzahnungsring
- 22: Trägerblech
- 24: Außenkoppelelement
- 26: Außen-Blattfederelement
- 28: Befestigungsbereich
- 30: Stahlscheibe
- 32: erste Reibfläche
- 34: zweite Reibfläche
- 36: Schlitz
- 38: Reibbelag
- 40: Innen-Blattfederelement
- 42: Innenkoppelelement

## Patentansprüche

1. Lamellenkupplung für einen Antriebsstrang eines Kraftfahrzeugs, mit
einem Außenlamellenträger (12) zum Übertragen eines Drehmoments,
mehreren in dem Außenlamellenträger (12) axial verschiebbar eingehangenen Außenlamellen (16) zur jeweiligen Bereitstellung einer ersten Reibfläche (32),
wobei zumindest eine der Außenlamellen (16) ein, insbesondere zahnförmiges, Außenkoppelelement (24) zur drehmomentübertragenden Koppelung mit dem Außenlamellenträger (12) aufweist,
einem Innenlamellenträger (14) zum Übertragen eines Drehmoments,
mehreren in dem Innenlamellenträger (14) axial verschiebbar eingehangenen Innenlamellen (14) zur jeweiligen Bereitstellung einerzweiten Reibfläche (34) für eine Reibpaarung mit der ersten Reibfläche (32) einer axial benachbarten Außenlamelle (16),
wobei zumindest eine der Innenlamellen (14) ein, insbesondere zahnförmiges, Innenkoppelelement (42) zur drehmomentübertragenden Koppelung mit dem Innenlamellenträger (14) aufweist,
**dadurch gekennzeichnet, dass** sämtliche Außenkoppelelemente (24) nach radial außen von einem in Umfangsrichtung durchgängig verlaufenden Außenring (20) und/oder sämtliche Innenkoppelelemente (42) nach radial innen von einem in Umfangsrichtung durchgängig verlaufenden Innenring (20) abstehen,
wobei die erste Reibfläche (32) über mindestens ein Außen-Blattfederelement (26) zur Bereitstellung einer federnden axialen Relativbewegung des Au-ßenkoppelelements (24) zu der ersten Reibfläche (32) mit dem Außenring (20) und/oder die zweite Reibfläche (34) über mindestens ein Innen-Blattfederelement (40) zur Bereitstellung einer federnden axialen Relativbewegung des Innenkoppelelements (42) zu der zweiten Reibfläche (34) mit dem Innenring (20) verbunden ist.

2. Lamellenkupplung nach Anspruch 1 gekennzeichnet, dass die Außenkoppelelemente (24) und die erste Reibfläche (32) auf unterschiedliche zur Ausbildung der Außenlamelle (16) miteinander verbundene Bauteile und/oder die Innenkoppelelemente (42) und die zweite Reibfläche (34) auf unterschiedliche zur Ausbildung der Innenlamelle (18) miteinander verbundene Bauteile aufgeteilt sind.

3. Lamellenkupplung nach Anspruch 1 oder 2 **dadurch gekennzeichnet, dass** das Außen-Blattfederelement (26) und/oder das Innen-Blattfederelement (40) im Wesentlichen in Umfangsrichtung und/oder in tangentialer Richtung verläuft.

4. Lamellenkupplung nach einem der Ansprüche 1 bis 3 **dadurch gekennzeichnet, dass** das Außenkoppelelement (24) über mindestens zwei, insbesondere genau zwei, Außen-Blattfederelemente (26) mit der ersten Reibfläche (32) und/oder das Innenkoppelelement (42) über mindestens zwei, insbesondere genau zwei, Innen-Blattfederelemente (40) mit der zweiten Reibfläche (34) verbunden ist.

5. Lamellenkupplung nach einem der Ansprüche 1 bis 4 **dadurch gekennzeichnet, dass** die Außenlamelle (16) einen im Wesentlichen in Umfangsrichtung verlaufenden und vollständig geschlossenen Schlitz (36) zur einstückigen Ausbildung des Außen-Blattfederelements (26) mit den Außenkoppelelement (24) und/oder die Innenlamelle (18) einen im Wesentlichen in Umfangsrichtung verlaufenden und vollständig geschlossenen Schlitz (36) zur einstückigen Ausbildung des Innen-Blattfederelements (40) mit den Innenkoppelelement (42) aufweist.

6. Lamellenkupplung nach einem der Ansprüche 1 bis 5 **dadurch gekennzeichnet, dass** die Erstreckung des Außen-Blattfederelements (26) in Umfangsrichtung mindestens der Erstreckung des Außenkoppelelements (24), insbesondere mindestens der doppelten Erstreckung des Außenkoppelelements (24), und/oder die Erstreckung des Innen-Blattfederelements (40) in Umfangsrichtung mindestens der Erstreckung des Innenkoppelelements (42), insbesondere mindestens der doppelten Erstreckung des Innenkoppelelements (42), entspricht.

7. Lamellenkupplung nach einem der Ansprüche 1 bis 6 **dadurch gekennzeichnet, dass** der Außenlamellenträger (12) eine regelmäßige oder unregelmäßige Innenverzahnung zur drehmomentübertragenden und axial verschiebbaren Aufnahme der Außenkoppelelemente (24) und/oder der Innenlamellenträger (14) eine regelmäßige oder unregelmäßige Außenverzahnung zur drehmomentübertragenden und axial verschiebbaren Aufnahme der Innenkoppelelemente (42) aufweist.

8. Lamellenkupplung nach einem der Ansprüche 1 bis 7 **dadurch gekennzeichnet, dass** die erste Reibfläche (32) oder die zweite Reibfläche (34) durch einen separaten Reibbelag (38) ausgebildet ist.

9. Lamellenkupplung nach einem der Ansprüche 1 bis 8 **dadurch gekennzeichnet, dass** eine axiale Relativbewegung der ersten Reibfläche (32) relativ zum Au-ßenkoppelelement (24) bezogen auf eine Ausgangslage bei minimaler axialer Federkraft des Außen-Blattfederelements (26) und/oder eine axiale Relativbewegung der zweiten Reibfläche (34) relativ zum Innenkoppelelement (42) bezogen auf eine Ausgangslage bei minimaler axialer Federkraft des Innen-Blattfederelement (40) in beide Axialrichtungen oder nur in eine Axialrichtung zugelassen ist.

10. Antriebsstrang für ein Hybrid-Kraftfahrzeug mit einer Brennkraftmaschine zum Antrieb des Hybrid-Kraftfahrzeug, einer elektrischen Maschine zum Antrieb des Hybrid-Kraftfahrzeug und einer Lamellenkupplung (10) nach einem der Ansprüche 1 bis 9 zur wahlweisen Koppelung einer Antriebswelle der Brennkraftmaschine mit einer mit einem Rotor der elektrischen Maschine gekoppelten Zwischenwelle, wobei insbesondere die Zwischenwelle den Rotor der elektrischen Maschine ausbildet.

## Claims

1. A multiple disc clutch for a drive train of a motor vehicle, having
an outer disc carrier (12) for transferring a torque,
a plurality of outer discs (16) suspended axially displaceably in the outer disc carrier (12) for the respective provision of a first friction surface (32),
wherein at least one of the outer discs (16) has an, in particular tooth-shaped, outer coupling element (24) for torque-transmitting coupling with the outer disc carrier (12),
an inner disc carrier (14) for transferring a torque,
a plurality of inner discs (14) suspended axially displaceably in the inner disc carrier (14) for the respective provision of a second friction surface (34) for a friction pairing with the first friction surface (32) of an axially adjacent outer disc (16),
wherein at least one of the inner discs (14) has an, in particular tooth-shaped, inner coupling element (42) for torque-transmitting coupling with the inner disc carrier (14),
**characterised in that** all outer coupling elements (24) protrude radially outwards from an outer ring (20) which runs continuously in the circumferential direction and/or all inner coupling elements (42) protrude radially inwards from an inner ring (20) which runs continuously in the circumferential direction,
wherein the first friction surface (32) is connected with the outer ring (20) via at least one outer leaf spring element (26) to provide a resilient axial relative movement of the outer coupling element (24) to the first friction surface (32) and/or the second friction surface (34) is connected with the inner ring (20) via at least one inner leaf spring element (40) to provide a resilient axial relative movement of the inner coupling element (42) to the second friction surface (34).

2. The multiple disc clutch according to claim 1, **characterised in that** the outer coupling elements (24) and the first friction surface (32) are divided between different components connected together to form the outer discs (16) and/or the inner coupling elements (42) and the second friction surface (34) are divided between different components connected together to form the inner discs (18).

3. The multiple disc clutch according to claim 1 or 2, **characterised in that** the outer leaf spring element (26) and/or the inner leaf spring element (40) extends substantially in the circumferential direction and/or in the tangential direction.

4. The multiple disc clutch according to one of claims 1 to 3, **characterised in that** the outer coupling element (24) is connected to the first friction surface (32) via at least two, in particular exactly two, outer leaf spring elements (26) and/or the inner coupling element (42) is connected to the second friction surface (34) via at least two, in particular exactly two, inner leaf spring elements (40).

5. The multiple disc clutch according to one of claims 1 to 4, **characterised in that** the outer plate (16) has a substantially circumferentially extending and completely closed slot (36) for the integral formation of the outer leaf spring element (26) with the outer coupling element (24) and/or the inner plate (18) has a substantially circumferentially extending and completely closed slot (36) for the integral formation of the inner leaf spring element (40) with the inner coupling element (42).

6. The multiple disc clutch according to one of claims 1 to 5, **characterised in that** the extension of the outer leaf spring element (26) in the circumferential direction corresponds at least to the extension of the outer coupling element (24), in particular at least twice the extension of the outer coupling element (24) and/or the extension of the inner leaf spring element (40) in the circumferential direction corresponds at least to the extension of the inner coupling element (42), in particular at least twice the extension of the inner coupling element (42).

7. The multiple disc clutch according to one of claims 1 to 6, **characterised in that** the outer plate carrier (12) has a regular or irregular internal toothing for torque-transmitting and axially displaceable accommodation of the outer coupling elements (24) and/or the inner disc carrier (14) has a regular or irregular external toothing for torque-transmitting and axially displaceable accommodation of the inner coupling elements (42).

8. The multiple disc clutch according to one of claims 1 to 7, **characterised in that** the first friction surface (32) or the second friction surface (34) is formed by a separate friction coating (38).

9. The multiple disc clutch according to one of claims 1 to 8, **characterised in that** an axial relative movement of the first friction surface (32) is permitted relative to the outer coupling element (24) with respect to an initial position with minimum axial spring force of the outer leaf spring element (26) and/or an axial relative movement of the second friction surface (34) is permitted relative to the inner coupling element (42) with respect to an initial position with minimum axial spring force of the inner leaf spring element (40) in both axial directions or only in one axial direction.

10. A drive train for a hybrid motor vehicle having an internal combustion engine for driving the hybrid motor vehicle, an electric machine for driving the hybrid motor vehicle and a multiple disc clutch (10) according to one of claims 1 to 9 for selectively coupling a drive shaft of the internal combustion engine to an intermediate shaft coupled to a rotor of the electric machine, wherein in particular the intermediate shaft forms the rotor of the electric machine.

## Revendications

1. Embrayage multidisques pour un groupe motopropulseur d'un véhicule automobile, comportant
un porte-disques extérieurs (12) pour transmettre un couple,
une pluralité de disques extérieurs (16) suspendus de manière mobile axialement dans le porte-disques extérieurs (12) pour fournir respectivement une première surface de friction (32),
au moins l'un des disques extérieurs (16) présentant un élément d'accouplement extérieur (24), notamment en forme de dent, pour un accouplement à transmission de couple avec le porte-disques extérieurs (12),
un porte-disques intérieurs (14) pour transmettre un couple,
une pluralité de disques intérieurs (14) suspendus de manière mobile axialement dans le porte-disques intérieurs (14) pour fournir respectivement une seconde surface de friction (34) pour un appariement de friction avec la première surface de friction (32) d'un disque extérieur (16) axialement adjacent,
au moins l'un des disques intérieurs (14) présentant un élément d'accouplement intérieur (42), notamment en forme de dent, pour un accouplement à transmission de couple avec le porte-disques intérieurs (14),
**caractérisé en ce que** tous les éléments d'accouplement extérieurs (24) dépassent radialement vers l'extérieur d'une bague extérieure (20) qui s'étend de manière continue dans la direction circonférentielle et/ou tous les éléments d'accouplement intérieurs (42) dépassent radialement vers l'intérieur d'une bague intérieure (20) qui s'étend de manière continue dans la direction circonférentielle,
la première surface de friction (32) étant reliée par l'intermédiaire d'au moins un élément de ressort à lames extérieur (26) à la bague extérieure (20) pour fournir un mouvement relatif axial élastique de l'élément d'accouplement extérieur (24) par rapport à la première surface de friction (32) et/ou la seconde surface de friction (34) est reliée par l'intermédiaire d'au moins un élément de ressort à lames intérieur (40) à la bague intérieure (20) pour fournir un mouvement relatif axial élastique de l'élément d'accouplement intérieur (42) par rapport à la seconde surface de friction (34).

2. Embrayage multidisques selon la revendication 1, **caractérisé en ce que** les éléments d'accouplement extérieurs (24) et la première surface de friction (32) sont répartis sur des pièces différentes reliées entre elles pour former le disque extérieur (16) et/ou les éléments d'accouplement intérieurs (42) et la seconde surface de friction (34) sont répartis sur des pièces différentes reliées entre elles pour former le disque intérieur (18).

3. Embrayage multidisques selon la revendication 1 ou 2, **caractérisé en ce que** l'élément de ressort à lames extérieur (26) et/ou l'élément de ressort à lames intérieur (40) s'étendent essentiellement dans le direction circonférentielle et/ou dans la direction tangentielle.

4. Embrayage multidisques selon l'une quelconque des revendications 1 à 3, **caractérisé en ce que** l'élément d'accouplement extérieur (24) est relié à la première surface de friction (32) par l'intermédiaire d'au moins deux, en particulier exactement deux, éléments de ressort à lames extérieurs (26) et/ou l'élément d'accouplement intérieur (42) est relié à la seconde surface de friction (34) par l'intermédiaire d'au moins deux, en particulier exactement deux, éléments de ressort à lames intérieurs (40).

5. Embrayage multidisques selon l'une quelconque des revendications 1 à 4, **caractérisé en ce que** le disque extérieur (16) présente une fente (36) s'étendant sensiblement dans la direction circonférentielle et complètement fermée pour la formation d'une seule pièce de l'élément de ressort à lames extérieur (26) avec l'élément d'accouplement extérieur (24) et/ou le disque intérieur (18) présente une fente (36) s'étendant sensiblement dans la direction circonférentielle et complètement fermée pour la formation d'une seule pièce de l'élément de ressort à lames intérieur (40) avec l'élément d'accouplement intérieur (42).

6. Embrayage multidisques selon l'une quelconque des revendications 1 à 5, **caractérisé en ce que** l'étendue de l'élément de ressort à lames extérieur (26) dans la direction circonférentielle correspond au moins à l'étendue de l'élément d'accouplement extérieur (24), en particulier au moins à deux fois l'étendue de l'élément d'accouplement extérieur (24) et/ou l'étendue de l'élément de ressort à lames intérieur (40) dans la direction circonférentielle correspond au moins à l'étendue de l'élément d'accouplement intérieur (42), en particulier au moins à deux fois l'étendue de l'élément d'accouplement intérieur (42).

7. Embrayage multidisques selon l'une quelconque des revendications 1 à 6, **caractérisé en ce que** le porte-disques extérieurs (12) présente une denture intérieure régulière ou irrégulière pour la réception à transmission de couple et déplaçable axialement des éléments d'accouplement extérieurs (24) et/ou le porte-disques intérieurs (14) présente une denture extérieure régulière ou irrégulière pour la réception à transmission du couple et déplaçable axialement des éléments d'accouplement intérieurs (42).

8. Embrayage multidisques selon l'une quelconque des revendications 1 à 7, **caractérisé en ce que** la première surface de friction (32) ou la seconde surface de friction (34) est formée par une garniture de friction (38) séparée.

9. Embrayage multidisques selon l'une quelconque des revendications 1 à 8, **caractérisé en ce qu'**un mouvement relatif axial de la première surface de friction (32) par rapport à l'élément d'accouplement extérieur (24) par rapport à une position de départ avec une force de ressort axiale minimale de l'élément de ressort à lames extérieur (26) et/ou un mouvement relatif axial de la seconde surface de friction (34) par rapport à l'élément d'accouplement intérieur (42) par rapport à une position de départ avec une force de ressort axiale minimale de l'élément de ressort à lames intérieur (40) est/sont autorisé(s) dans les deux directions axiales ou seulement dans une direction axiale.

10. Groupe motopropulseur pour un véhicule automobile hybride comportant un moteur à combustion interne pour entraîner le véhicule automobile hybride, une machine électrique pour entraîner le véhicule automobile hybride et un embrayage multidisques (10) selon l'une quelconque des revendications 1 à 9 pour accoupler sélectivement un arbre de transmission du moteur à combustion interne à un arbre intermédiaire accouplé à un rotor de la machine électrique, notamment l'arbre intermédiaire formant le rotor de la machine électrique.
